# EUROPÄISCHE PATENTSCHRIFT

(11) **EP 1 778 736 B1**
(45) Veröffentlichungstag und Bekanntmachung des Hinweises auf die Patenterteilung: **28.05.2008**
(21) Anmeldenummer: 05775929.2
(22) Anmeldetag: 30.07.2005
(51) Int. Cl.: C08F 2/16, C08F 2/18, C08F 2/20, C08F 2/04

(54) **WÄSSRIGE DISPERSIONEN VON WASSERLÖSLICHEN UND/ODER IN WASSER QUELLBAREN ANIONISCHEN POLYMERISATEN, VERFAHREN ZU IHRER HERSTELLUNG UND IHRE VERWENDUNG**
AQUEOUS DISPERSIONS OF WATER-SOLUBLE AND/OR WATER-SWELLABLE ANIONIC POLYMERS, METHOD FOR THEIR PRODUCTION AND USE THEREOF
DISPERSIONS AQUEUSES DE POLYMERISATS ANIONIQUES SOLUBLES DANS L'EAU ET/OU EXPANSIBLES DANS L'EAU, PROCEDE DE FABRICATION ET UTILISATION

(30) Priorität: 10.08.2004 DE 102004038983
(43) Veröffentlichungstag der Anmeldung: 02.05.2007
(73) Patentinhaber: BASF SE, 67056 Ludwigshafen (DE)
(72) Erfinder: BRAIG, Volker, 69469 Weinheim-Lützelsachsen (DE); GAUWEILER, Werner, 67363 Lustadt (DE); MUKHERJEE, Pulakesh, 68309 Mannheim (DE); WEIDL, Christian Hubert, 68167 Mannheim (DE)
(86) Internationale Anmeldenummer: PCT/EP2005/008276
(87) Internationale Veröffentlichungsnummer: WO 2006/018113

(56) Entgegenhaltungen:
- EP-A- 0 761 701
- EP-A- 0 838 498
- DE-A1- 4 216 167
- DE-A1- 10 241 296
- US-A- 5 750 614
- US-A- 5 985 992

## Beschreibung

Die Erfindung betrifft wässrige Dispersionen von wasserlöslichen und/oder in Wasser quellbaren anionischen Polymerisaten, die erhältlich sind durch radikalische Polymerisation von anionischen Monomeren in wässrigem Medium in Gegenwart mindestens eines Stabilisators, ihre Herstellung und ihre Verwendung als Verdickungsmittel für wässrige Systeme.

Aus der US-A-4 380 600 ist ein Verfahren zur Herstellung von wässrigen Dispersionen von wasserlöslichen Polymeren bekannt, wobei man wasserlösliche Monomere, die wasserlösliche Polymere bilden, in einer wässrigen Lösung mindestens eines anderen Polymeren wie Polyethylenglykol, Polyvinylpyrrolidon oder Stärke, in Gegenwart von Radikale bildenden Initiatoren polymerisiert. Die wässrige Lösung des anderen Polymeren, die bei der Polymerisation vorgelegt wird, enthält 3 bis 150 Gewichtsteile des wasserlöslichen Polymeren, bezogen auf 100 Gewichtsteile Wasser. Die Menge der bei der Polymerisation eingesetzten wasserlöslichen Monomeren wie Acrylsäure, Natriumacrylat oder Acrylamid, beträgt 10 bis 150 Gewichtsteile, bezogen auf 100 Gewichtsteile Wasser. Um die Stabilität der so erhältlichen wässrigen Dispersionen von wasserlöslichen Polymeren zu erhöhen, kann man die Polymerisation zusätzlich in Gegenwart von oberflächenaktiven Mitteln und bei Bedarf auch noch in Gegenwart von wasserlöslichen anorganischen Salzen wie Natriumchlorid oder Kaliumsulfat durchführen.

Aus der EP-A-0 183 466 ist ein Verfahren zur Herstellung von wässrigen Dispersionen von wasserlöslichen Polymeren bekannt, wobei man die wasserlöslichen Monomeren in einer wässrigen Lösung polymerisiert, die ein Salz z.B. Ammoniumsulfat, und ein polymeres Dispergiermittel enthält, z.B. Polyole, Polyethylenglykol und/oder Polypropylenglykol mit einem Molekulargewicht bis zu 600, kationische oder anionische Polyelektrolyte. Mit Ausnahme von Homopolymerisaten aus speziellen kationischen Monomeren können nach diesem Verfahren keine Homopolymerisate von ionischen Monomeren hergestellt werden, vgl. EP-A-0 183 466, Seite 5, Zeilen 2 bis 6. Wie die Beispiele zeigen, kann man jedoch Copolymerisate aus Acrylamid und Acrylsäure herstellen.

Aus der US-A-5,605,970 ist ein Verfahren zur Herstellung von wässrigen Dispersionen von hochmolekularen anionischen Polymeren bekannt. Bei diesem Verfahren polymerisiert man eine wässrige Lösung von Acrylsäure unter Zusatz von 2 bis 20 Gew.-% Ammoniumsulfat, Glyzerin, Ethylenglykol und eines niedrigmolekularen Terpolymeren aus 66 Mol-% Acrylsäure, 22 Mol-% Natriumacrylat und 12 Mol-% Ethylhexylacrylat in Gegenwart von 3 bis 14 Mol-% Ethylhexylacrylat und einem Polymerisationsinitiator bei einem pH-Wert unterhalb von 4,5 unter Bildung einer wässrigen Dispersion eines hochmolekularen Terpolymerisates aus Acrylsäure, Natriumacrylat und Ethylhexylacrylat. Das Terpolymerisat wird nach dem Abkühlen isoliert. Bei dem bekannten Verfahren ist es unerlässlich, ein anorganisches Salz und ein hydrophobes Monomer wie Ethylhexylacrylat, einzusetzen. Dadurch werden aber die Eigenschaften der anionischen Polymerisate in unerwünschter Weise verändert.

Außerdem sind wässrige Dispersionen von wasserlöslichen Polymerisaten von N-Vinylcarbonsäureamiden bekannt. Sie werden gemäß der Lehre der WO-A 03/046024 durch Polymerisieren von N-Vinylcarbonsäureamiden in wässrigem Medium in Gegenwart von polymeren Stabilisatoren wie Polyethylenglykol, Polypropylenglykol, Polyvinylacetat, Polyvinylalkohol, Polyvinylimidazol oder Polydiallyldimethylammoniumchlorid, hergestellt oder durch Polymerisieren von N-Vinylcarbonsäureamiden in wässrigen Lösungen erhalten, die hohe Konzentrationen an anorganischen Salzen aufweisen, vgl. die Beispiele in der EP-B 0 984 990.

Aus der WO-A 97/34933 sind wässrige Dispersionen von hochmolekularen nichtionischen oder anionischen Polymeren bekannt, die durch Polymerisation der Monomeren in einer gesättigten wässrigen Salzlösung unter Zusatz eines anionischen, wasserlöslichen Polymerstabilisators hergestellt werden. Bevorzugt eingesetzte Monomere sind Acrylamid und/oder Acrylsäure. Geeignete Polymerstabilisatoren sind beispielsweise anionisch geladene wasserlösliche Polymere mit einer Molmasse von 100 000 bis 5 Millionen wie Polymere der Acrylamidomethylpropansulfonsäure. Sie werden in Mengen von beispielsweise 0,1 bis 5 Gewichtsprozent, bezogen auf die gesamte Dispersion, eingesetzt. Während der Polymerisation muß ein pH-Wert in dem Bereich von 2 bis 5 eingehalten werden.

Wässrige Dispersionen von wasserlöslichen anionischen Polymeren, die anorganische Salze in gelöster Form enthalten, können beispielsweise nicht als Verdickungsmittel für wässrige Systeme wie Papierstreichmassen, verwendet werden, weil die anorganischen Salze die Viskosität des zu verdickenden Systems stark erniedrigen. Diese Eigenschaft ist als "salt poisonig effect" bekannt.

Aus der älteren DE-Anmeldung 103 38 828.1 sind wässrige Dispersionen von wasserlöslichen, anionischen Polymerisaten bekannt, die durch radikalische Polymerisation von ethylenisch ungesättigten anionischen Monomeren in wässrigem Medium in Gegenwart mindestens eines Stabilisators erhältlich sind, wobei als Stabilisator mindestens ein wasserlösliches Polymer aus den Gruppen
(a) Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole, Copolymerisate aus Alkylpolyalkylen-glykolacrylaten oder Alkylpolyalkylenglykolmethacrylaten und Acrylsäure und/oder Methacrylsäure, Polyalkylenglykole mit Molmassen M_{N} von 1000 bis 100 000, ein- oder beidseitig mit Alkyl-, Carboxyl- oder Aminogruppen endgruppenverschlossene Polyalkylenglykole mit Molmassen M_{N} von 1000 bis 100 000
   und
(b) hydrolysierte Copolymerisate aus Vinylalkylethern und Maleinsäureanhydrid in Form der freien Carboxylgruppen und in Form der zumindest partiell mit Alkalimetallhydroxiden oder Ammoniumbasen neutralisierten Salze und/oder einer wasserlöslichen Stärke aus der Gruppe kationisch modifizierter Kartoffelstärke, anionisch modifizierter Kartoffelstärke, abgebauter Kartoffelstärke und Maltodextrin
eingesetzt wird. Die wässrigen Dispersionen werden als Verdickungsmittel für wässrige Systeme wie Papierstreichmassen, Pigmentdruckpasten, Kosmetikformulierungen und Lederbehandlungsmittel, eingesetzt.

Der Erfindung liegt die Aufgabe zugrunde, weitere wässrige Dispersionen von wasserlöslichen anionischen Polymeren zur Verfügung zu stellen, bei deren Herstellung keine stabilisierend wirkenden anorganischen Salze eingesetzt werden müssen, so dass die entstehenden Dispersionen praktisch frei von solchen Salzen sind.

Die Aufgabe wird erfindungsgemäß gelöst mit wässrigen Dispersionen von wasserlöslichen und/oder in Wasser quellbaren anionischen Polymerisaten, die erhältlich sind durch radikalische Polymerisation von ethylenisch ungesättigten, anionischen Monomeren in wässrigem Medium in Gegenwart mindestens eines Stabilisators, wenn man die Polymerisation in Gegenwart einer Kombination aus mindestens einem wasserlöslichen Polymeren aus der Gruppe
(a) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen, Poly-alkylenglykole, ein- oder beidseitig mit Alkyl-, Carboxyl- oder Aminogruppen endgruppenverschlossene Polyalkylenglykole
   und
(b) wasserlöslichen Copolymeren aus
   (b1) nichtionischen monoethylenisch ungesättigten Monomeren,
   (b2) kationischen monoethylenisch ungesättigten Monomeren und gegebenenfalls
   (b3) anionischen monoethylenisch ungesättigten Monomeren, wobei der Anteil der einpolymerisierten kationischen Monomeren größer ist als der der anionischen Monomeren,
als Stabilisator durchführt.

Als ethylenisch ungesättigte, anionische Monomere kommen beispielsweise monoethylenisch ungesättigte C₃- bis C₅-Carbonsäuren wie Acrylsäure, Methacrylsäure, Ethacrylsäure, Crotonsäure, Maleinsäure, Fumarsäure, Vinylsulfonsäure, Styrolsulfonsäure, Acrylamidomethylpropansulfonsäure, Vinylphosphonsäure, Itaconsäure und/oder die Alkalimetall- oder Ammoniumsalze dieser Säuren in Betracht. Zu den bevorzugt eingesetzten anionischen Monomeren gehören Acrylsäure, Methacrylsäure, Maleinsäure und Acrylamido-2-methylpropansulfonsäure. Besonders bevorzugt sind wässrige Dispersionen von Polymerisaten auf Basis von Acrylsäure. Die anionischen Monomeren können entweder allein zu Homopolymerisaten oder auch in Mischung untereinander zu Copolymerisaten polymerisiert werden. Beispiele hierfür sind die Homopolymerisate der Acrylsäure oder Copolymerisate der Acrylsäure mit Methacrylsäure und/oder Maleinsäure.

Die Polymerisation der anionischen Monomeren kann jedoch auch in Gegenwart von anderen ethylenisch ungesättigten Monomeren durchführt. Diese Monomeren können nichtionisch sein oder aber eine kationische Ladung tragen. Beispiele für solche Comonomere sind Acrylamid, Methacrylamid, Acrylsäureester von einwertigen Alkoholen mit 1 bis 20 C-Atomen, Methacrylsäureester von einwertigen Alkoholen mit 1 bis 20 C-Atomen, Vinylacetat, Vinylpropionat, Dialkylaminoethyl(meth)acrylate, Dialkylaminopropyl(meth)-acrylate, Diallyldimethylammoniumchlorid, N-Vinylformamid, Vinylimidazol und quaterniertes Vinylimidazol. Basische Monomere wie Dialkylaminoalkyl(meth)acrylate, z.B. Dimethylaminoethylacrylat oder Dimethylaminoethylmethacrylat, können sowohl in Form der freien Basen als auch in teilweise oder in vollständig neutralisierter oder in beispielsweise mit C₁- bis C₁₈-Alkylhalogeniden quaternierter Form bei der Polymerisation eingesetzt werden. Die Comonomeren werden bei der Herstellung der anionischen Polymerisate beispielsweise in solchen Mengen eingesetzt, dass die entstehenden Polymeren wasserlöslich sind und eine anionische Ladung aufweisen. Bezogen auf die bei der Polymerisation insgesamt eingesetzten Monomeren beträgt die Menge an nichtionischen und/oder kationischen Comonomeren z.B. 0 bis 99, vorzugsweise 5 bis 75 Gew.-%.

Bevorzugte Copolymere sind beispielsweise Copolymerisate aus 25 bis 90 Gew.-% Acrylsäure und 75 bis 10 Gew.-% Acrylamid. Besonders bevorzugt sind Homopolymerisate von Acrylsäure, die durch radikalische Polymerisation von Acrylsäure in Abwesenheit von anderen Monomeren erhältlich sind sowie Copolymerisate aus Acrylsäure und/oder Methacrylsäure, die durch Copolymerisieren von Acrylsäure und/oder Methacrylsäure in Gegenwart von Pentaerythrittriallylether, N,N'-Divinylethylenharnstoff, mindestens zwei Allylgruppen enthaltende Allylether von Zuckern wie Saccharose, Glucose oder Mannose oder Triallylamin sowie Mischungen dieser Verbindungen herstellbar sind.

Die Polymerisation kann zusätzlich in Gegenwart mindestens eines Vernetzers durchgeführt werden. Man erhält dann Copolymere mit einer höheren Molmasse als beim Polymerisieren der anionischen Monomeren in Abwesenheit eines Vernetzers. Der Einbau eines Vernetzers in die Polymeren führt außerdem zu einer verringerten Löslichkeit der Polymeren in Wasser. In Abhängigkeit von der Menge an einpolymerisiertem Vernetzer werden die Polymeren wasserunlöslich, sind jedoch in Wasser quellbar. Zwischen vollständiger Löslichkeit der Polymeren in Wasser und dem Quellen der Polymeren in Wasser gibt es fließende Übergänge. Vernetzte Copolymere haben aufgrund ihres Quellvermögens in Wasser ein hohes Wasseraufnahmevermögen. Sie sind beispielsweise als Verdickungsmittel für wässrige Systeme wie Papierstreichmassen, einsetzbar.

Als Vernetzer können alle Verbindungen verwendet werden, die über mindestens zwei ethylenisch ungesättigte Doppelbindungen im Molekül verfügen. Solche Verbindungen werden beispielsweise bei der Herstellung vernetzter Polyacrylsäuren wie superabsorbierenden Polymeren eingesetzt, vgl. EP-A 0 858 478, Seite 4, Zeile 30 bis Seite 5, Zeile 43. Beispiele für Vernetzer sind Triallylamin, Pentaerythrittriallether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z.B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der anionischen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomeren. Bevorzugt verwendete Vernetzer sind Pentaerythrittriallylether, N,N'-Divinylethylenharnstoff, mindestens zwei Allylgruppen enthaltende Allylether von Zuckern wie Saccharose, Glucose oder Mannose und Triallylamin sowie Mischungen dieser Verbindungen.

Die Polymerisation kann zusätzlich in Gegenwart mindestens eines Kettenüberträgers durchgeführt werden. Man erhält dann Polymere, die eine niedrigere Molmasse besitzen als ohne Kettenüberträger hergestellte Polymere. Beispiele für Kettenüberträger sind Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Düsopropyldisulfid, 2-Mercaptoethanol, 1,3-Mercaptopröpanol, 3-Mercaptopropan-1,2-diol, 1,4-Mercaptobutanol, Thioglykolsäure, 3-Mercaptopropionsäure, Mercaptobemseinsäure, Thioessigsäure und Thioharnstoff, Aldehyde, organische Säuren wie Ameisensäure, Natriumformiat oder Ammoniumformiat, Alkohole wie insbesondere Isopropanol sowie Phosphorverbindungen, z.B. Natriumhypophosphit. Man kann einen einzigen oder mehrere Kettenüberträger bei der Polymerisation einsetzen. Falls man sie bei der Polymerisation verwendet, setzt man sie beispielsweise in einer Menge von 0,01 bis 5,0, vorzugsweise 0,2 bis 1 Gew.-%, bezogen auf die gesamten Monomeren, ein. Die Kettenüberträger werden vorzugsweise zusammen mit mindestens einem Vernetzer bei der Polymerisation eingesetzt. Durch Variation der Menge und des Verhältnisses von Kettenüberträger und Vernetzer ist es möglich, die Rheologie der entstehenden Polymerisate zu steuern. Kettenüberträger und/oder Vernetzer können bei der Polymerisation beispielsweise im wässrigen Polymerisationsmedium vorgelegt oder zusammen oder getrennt von den Monomeren je nach Fortschreiten der Polymerisation zum Polymerisationsansatz dosiert werden.

Bei der Polymerisation verwendet man üblicherweise Initiatoren, die unter den Reaktionsbedingungen Radikale bilden. Geeignete Polymerisationsinitiatoren sind beispielsweise Peroxide, Hydroperoxide, Wasserstoffperoxid, Natrium- oder Kaliumpersulfat, Redoxkatalysatoren und Azoverbindungen wie 2,2-Azobis(N,N- dimethylenisobutyramidin) dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid). Die Initiatoren werden in den bei der Polymerisation üblichen Mengen eingesetzt. Bevorzugt werden Azostarter als Polymerisationsinitiatoren verwendet. Man kann die Polymerisation jedoch auch mit Hilfe emergiereicher Strahlen wie Elektronenstrahlen oder durch Bestrahlen mit UV-Licht initiieren.

Die wässrigen Dispersionen der wasserlöslichen anionischen Polymeren haben eine Polymerkonzentration an anionischen Polymeren von beispielsweise 1 bis 70 Gew.-%, meistens 5 bis 50, bevorzugt 10 bis 25 und besonders bevorzugt 15 bis 20 Gew.-%.
Sie enthalten erfindungsgemäß mindestens zwei unterschiedliche Gruppen der obengenannten Polymeren (a) und (b) zur Stabilisierung der bei der Polymerisation entstehenden anionischen Polymeren. Die Menge an Stabilisatoren (a) und (b) in der wässrigen Dispersion beträgt beispielsweise 1 bis 40 Gew.-%, meistens 5 bis 30 Gew.-% und vorzugsweise 10 bis 25 Gew.-%. Die wässrigen Dispersionen haben beispielsweise bei einem pH-Wert von 2,5 Viskositäten in dem Bereich von 200 bis 100 000 mPas, vorzugsweise 200 bis 20 000 mPas, bevorzugt 200 bis 10 000 mPas (gemessen in einem Brookfield-Viskosimeter bei 20°C, Spindel 6, 100 UpM).

Zu den Stabilisatoren der Gruppe (a) gehören Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen, sowie außerdem Polyalkylenglykole und ein- oder beidseitig mit Alkyl-, Carboxyl- oder Aminogruppen endgruppenverschlossene Polyalkylenglykole.

Polyalkylenglykole werden beispielsweise in der WO-A 03/046024, Seite 4, Zeile 37 bis Seite 8, Zeile 9, beschrieben. Die darin beschriebenen Polyalkylenglykole können entweder direkt als Stabilisator der Gruppe (a) eingesetzt oder dahingehend modifiziert werden, dass man auf 100 Gewichtsteile der Polyalkylenglykole beispielsweise 10 bis 1000, vorzugsweise 30 bis 300 Gewichtsteile Vinylacetat und/oder Vinylpropionat pfropft. Bevorzugt setzt man als Pfropfgrundlage Polyethylenglykol mit einem Molekulargewicht M_{N} von 1000 bis 100 000 ein und pfropft darauf Vinylacetat.

Weitere geeignete Stabilisatoren (a) sind die oben bereits erwähnten Polyalkylenglykole sowie die ein- oder beidseitig mit Alkyl-, Carboxyl- oder Aminogruppen endgruppenverschlossenen Polyalkylenglykole. Die vorstehend genannten Polymeren haben beispielsweise Molmassen M_{N} von 100 bis 100 000, bevorzugt von 300 bis 80 000, besonders bevorzugt von 600 bis 50 000 und insbesondere von 1 000 bis 50 000. Solche Polymere werden beispielsweise in der oben zitierten WO-A 03/046024, Seite 4, Zeile 37 bis Seite 8, Zeile 9, beschrieben. Bevorzugte Polyalkylenglykole sind beispielsweise Polyethylenglykol, Polypropylenglykol sowie Blockcopolymere aus Ethylenoxid und Propylenoxid. Die Blockcopolymeren können Ethylenoxid und Propylenoxid in beliebigen Mengen und in beliebiger Reihenfolge einpolymerisiert enthalten. Die OH-Endgruppen der Polyalkylenglykole können gegebenenfalls ein- oder beidseitig mit Alkyl-, Carboxyl- oder Aminogruppen endgruppenverschlossen sein, wobei als Endgruppe vorzugsweise eine Methylgruppe in Betracht kommt.

Besonders bevorzugt eingesetzte Stabilisatoren der Gruppe (a) sind Copolymere aus Ethylenoxid und Propylenoxid. Insbesondere bevorzugt sind Blockcopolymere aus Ethylenoxid und Propylenoxid mit einer Molmasse M_{N} von 500 bis 20 000 g/mol und einem Gehalt an Ethylenoxideinheiten von 10 bis 80 mol-%.

Die wasserlöslichen Polymere der Gruppe (a) werden beispielsweise in Mengen von 1 bis 39,5 Gew.-%, vorzugsweise 5 bis 30 Gew.-% und besonders bevorzugt 10 bis 25 Gew.-%, bezogen auf die gesamte Dispersion, bei der Herstellung der Dispersionen eingesetzt.

Als Polymere der Gruppe (b) verwendet man wasserlösliche Copolymere aus
(b1) wasserlöslichen, nichtionischen, monoethylenisch ungesättigten Monomeren,
(b2) wasserlöslichen, kationischen, monoethylenisch ungesättigten Monomeren und gegebenenfalls
(b3) wasserlöslichen, anionischen, monoethylenisch ungesättigten Monomeren, wobei der Anteil der einpolymerisierten kationischen Monomere größer ist als der der anionischen Monomeren.

Beispiele für wasserlösliche, nichtionische Monomere (b1) sind Acrylamid, Methacrylamid, N-Vinylformamid, N-Vinylpyrrolidon und N-Vinylcaprolactam. Prinzipiell eignen sich als Monomere der Gruppe (b1) alle nichtionischen, monoethylenisch ungesättigten Monomere, die eine Wasserlöslichkeit von mindestens 100 g/l bei einer Temperatur von 20°C haben. Besonders bevorzugt sind Monomere (b1), die in jedem Verhältnis mit Wasser mischbar sind und klare wässrige Lösungen bilden wie Acrylamid oder N-Vinylformamid.

Wasserlösliche, kationische, monoethylenisch ungesättigte Monomere (b2) sind beispielsweise Dialkylaminoalkyl(meth)acrlylate wie Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dialkyldiallyammoniunhalogenide wie Dimethyldiallylammoniumchlorid und Diethyldiallylammoniumchlorid, N-Vinylimidazol und quaterniertes N-Vinylimidazol. Basische Monomere wie Dimethylaminoethylacrylat oder Dimethylaminoethylmethacrylat, können sowohl in Form der freien Basen als auch in teilweise oder vollständig mit Säuren wie Salzsäure, Schwefelsäure, Ameisensäure und p-Toluolsulfonsäure neutralisierter Form eingesetzt werden. Die basischen Monomeren können außerdem teilweise oder vollständig mit C₁- bis C₁₈-Alkylhalogeniden und/oder C₁- bis C₁₈-Alkyl C₁- bis C₁₈-Alkylarylhalogeniden quaterniert sein und in dieser Form bei der Polymerisation eingesetzt werden. Beispiele hierfür sind die vollständig mit Methylchlorid quaternierten Dimethylaminoethyl(meth)acrylate wie Dimethylaminoethylacrylatmethochlorid oder Dimethylaminoethylmethacrylat-methochlorid. Die Polymeren der Gruppe (b) können als kationische Gruppe auch Vinylamineinheiten enthalten. Solche Polymeren sind z.B. dadurch erhältlich, dass man N-Vinylformamid gegebenenfalls zusammen mit mindestens einem anionischen wasserlöslichen Monomer polymerisiert und die Polymeren anschließend unter teilweiser Abspaltung von Formylgruppen zu Vinylamineinheiten enthaltenden Polymeren hydrolysiert.

Die Polymeren der Gruppe (b) können gegebenenfalls noch mindestens ein anionisches monoethylenisch ungesättigtes Monomer (b3) einpolymerisiert enthalten. Beispiele für solche Monomere sind die obengenannten anionischen Monomeren, die wasserlösliche Polymere bilden wie Acrylsäure, Methacrylsäure, Vinylsulfonsäure, Vinylphosphonsäure, Maleinsäure, Fumarsäure, Crotonsäure, Itakonsäure sowie die Alkalimetall- und Ammoniumsalze dieser Säuren.

Beispiele für Copolymere der Gruppe (b) sind wasserlösliche Copolymerisate aus
(b1) Acrylamid, Methacrylamid, N-Vinylformamid, N-Vinylpyrrolidon und/oder N-Vinylcaprolactam,
(b2) Dialkylaminoalkylacrylat, Dialkylaminoalkylmethacrylat, partiell oder vollständig neutralisierte Dialkylaminoalkyl(meth)acrylate, quaternierte Dialkylaminoalkyl-(meth)acrylate, Dialkyldiallylammoniunhalogenide, N-Vinylimidazol und quaterniertem N-Vinylimidazol und gegebenenfalls
(b3) Acrylsäure, Methacrylsäure, Vinylsulfonsäure, Vinylphosphonsäure, Maleinsäure, Fumarsäure, Crotonsäure, Itakonsäure sowie die Alkalimetall- und Ammoniumsalze dieser Säuren.

Die wasserlöslichen Polymere (b) enthalten beispielsweise
(b1) 2 bis 90, vorzugsweise 20 bis 80 und besonders bevorzugt 35 bis 70 mol-% mindestens eines nichtionischen Monomers
(b2) 2 bis 90, vorzugsweise 20 bis 80 und besonders bevorzugt 35 bis 70 mol% mindestens eines kationischen Monomers
   und
(b3) 0 bis 48,9 mol-%, vorzugsweise 0 bis 30 und besonders bevorzugt 0 bis 10 mol-% mindestens eines anionischen Monomers in einpolymerisierter Form, wobei der Anteil der kationischen Monomereinheiten größer ist als der der anionischen Monomereinheiten.

Einzelne Beispiele für Polymere (b) sind Copolymerisate aus Acrylamid und Dimethylaminoethylacrylatmethochlorid, Copolymerisate aus Acrylamid und Dimethylaminoethylmethacrylatmethochlorid, Copolymerisate aus Acrylamid und Dimethylaminopropylacrylatmethochlorid, Copolymerisate aus Methacrylamid und Dimethylaminoethylmethacrylmethochlorid, Copolymerisate aus Acrylamid, Dimethylaminoethylacrylatmethochlorid und Acrylsäure, Copolymerisate aus Acrylamid, Dimethylaminoethylmethacrylatmethochlorid und Methacrylsäure und Copolymerisate aus Acrylamid, Dimethylaminoethylacrylatmethochlorid und Acrylsäure.

Die Polymeren (b) haben beispielsweise einen K-Wert von 15 bis 200 , vorzugsweise 30 bis 150 und besonders bevorzugt 45 bis 110 (bestimmt nach H. Fikentscher, Cellulose-Chemie, Band 13, 58 - 64 und 71 - 74 (1932) in 3 gew.-%iger wässriger Kochsalzlösung bei 25°C, einer Polymerkonzentration von 0,1 Gew.-% und einem pH-Wert von 7).

Die erfindungsgemäßen wässrigen Dispersionen enthalten die Polymere der Gruppe (b) beispielsweise in Mengen von 0,5 bis 15, vorzugsweise 1 bis 10 Gew.-%.

Die wässrigen Dispersionen der anionischen Polymerisate enthalten vorzugsweise als Stabilisator eine Kombination aus
(a) mindestens einem Blockcopolymer aus Ethylenoxid und Propylenoxid
   und
(b) mindestens einem Copolymer aus Acrylamid und Dimethylaminoethylacrylatmethochlorid.

Das Copolymer (b) kann gegebenenfalls noch bis zu 5 mol-% Acrylsäure in einpolymerisierter Form enthalten.

Das Verhältnis der Komponenten (a) und (b) in den Stabilisatormischungen kann in einem weiten Bereich variiert werden. Es kann beispielsweise 50 : 1 bis 1 : 10 betragen. Vorzugsweise wählt man ein Verhältnis von (a) : (b) von mindestens 1,5 : 1, insbesondere von 7 : 1 bis 10 : 1.

Gegenstand der Erfindung ist außerdem auch ein Verfahren zur Herstellung von wässrigen Dispersionen von wasserlöslichen und/oder in Wasser quellbaren anionischen Polymerisaten durch radikalische Polymerisation von ethylenisch ungesättigten, anionischen Monomeren in wässrigem Medium in Gegenwart mindestens eines Stabilisators, wobei man die Polymerisation in Gegenwart einer Kombination aus mindestens einem wasserlöslichen Polymeren aus der Gruppe
(a) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen, Poly-alkylenglykole, ein- oder beidseitig mit Alkyl-, Carboxyl- oder Aminogruppen endgruppenverschlossene Polyalkylenglykole
   und
(b) wasserlöslichen Copolymeren aus
   (b1) nichtionischen monoethylenisch ungesättigten Monomeren,
   (b2) kationischen monoethylenisch ungesättigten Monomeren und gegebenenfalls
   (b3) anionischen monoethylenisch ungesättigten Monomeren, wobei der Anteil der einpolymerisierten kationischen Monomeren größer ist als der der anionischen Monomeren,
als Stabilisator durchführt.

Man erhält stabile wässrige Dispersionen von anionischen Polymerisaten mit einer Teilchengröße von 0,1 bis 200 µm, vorzugsweise 0,5 bis 70 µm. Die Teilchengröße kann z. B. durch optische Mikroskopie, Lichtstreuung oder Gefrierbruchelktronenmikroskopie bestimmt werden. Die wässrigen Dispersionen werden beispielsweise bei pH-Werten von 0,5 bis 6, vorzugsweise 1 bis 3 hergestellt. Bei pH-Werten unterhalb von 6 haben Dispersionen mit einem Gehalt an anionischen Polymeren von etwa 5 bis 35 Gew.-% eine relativ niedrige Viskosität. Verdünnt man sie aber auf einen Gehalt an anionischen Polymeren weniger als 2 Gew.-%, so steigt die Viskosität der Mischung stark an.

Gegenstand der Erfindung ist außerdem die Verwendung der wäßrigen Dispersionen als Verdickungsmittel für wässrige Systeme, z.B. als Verdickungsmittel für Papierstreichmassen, Pigmentdruckpasten, wässrige Farben, Kosmetikformulierungen, pharmazeutische Erzeugnisse und Agrochemikalien. Die erfindungsgemäßen wässrigen Dispersionen können darüber hinaus auch als Beschichtungsmittel für Substrate wie Papier, Holz, Glas, Metall und Keramikartikel sowie in Wasch- und Reinigungsmitteln verwendet werden. Sie eignen sich außerdem als Matrix für die kontrollierte Abgabe von Wirkstoffen in kosmetischen oder pharmazeutischen Formulierungen.

Die wässrigen Dispersionen der anionischen Polymeren werden vorzugsweise als Verdickungsmittel, beispielsweise als Zusatz zu Papierstreichmassen, als Verdickungsmittel für Pigmentdruckpasten und als Zusatz zu wässrigen Farben wie Fassadenfarben eingesetzt. Sie werden außerdem in der Kosmetik eingesetzt, z.B. in haarkosmetischen Zubereitungen wie Conditioner oder Haarfestiger oder als Verdicker für Kosmetikformulierungen sowie für die Oberflächenbehandlung von Leder. Die wässrigen Dispersionen der anionischen Polymeren können allgemein als Reologiemodifizierer von Präparationen wie beispielsweise Pigmentdruckpasten oder Kosmetikformulierungen verwendet werden.

Eine spezielle Anwendungsform der erfindungsgemäßen wässrigen Dispersionen der anionischen Polymeren liegt in der Herstellung von bedruckten flexiblen Substraten und insbesondere bedrucktem Textil, im Folgenden auch Textildruckverfahren genannt.

Zur Durchführung des Textildruckverfahrens kann man beispielsweise so vorgehen, dass man mindestens eine erfindungsgemäße wässrige Dispersion zu einer Pigmentdruckpaste verarbeitet und danach nach an sich bekannten Methoden textile Substrate bedruckt. Vorteilhaft stellt man solche Pigmentdruckpasten durch Mischen von mindestens einer erfindungsgemäßen wässrigen Dispersion mit im Druckprozess gängigen Hilfsmitteln und mindestens einem Pigment her. Die Farbtiefe stellt man vorteilhaft durch Abstimmen des Verhältnisses Pigment zu erfindungsgemäß eingesetzter wässriger Dispersion ein.

Die Pigmente fügt man der Pigmentdruckpaste vorzugsweise in Form von Pigmentzubereitungen zu. Pigmentzubereitungen enthalten üblicherweise 20 bis 60 Gew.-% Pigment, weiterhin Wasser und eine oder mehrere oberflächenaktive Verbindungen, beispielsweise einen oder mehrere Emulgatoren, beispielhaft seien mehrfach alkoxylierte C₁₀-C₃₀-Alkanole genannt.

Unter Pigmenten sind im Rahmen der vorliegenden Erfindung praktisch nicht lösliche, dispergierte feinteilige, organische oder anorganische Farbmittel gemäß der Definition in DIN 55944 zu verstehen. Bevorzugt wählt man mindestens ein organisches Pigment und/oder Metallpigment aus.

Beispiele für organische Pigmente sind
- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260; C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23),190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
- C.I. Pigment Yellow 101 (Aldazingelb)
- C.I. Pigment Brown 22.

Beispiele für besonders bevorzugte Pigmente sind: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Weitere geeignete Pigmente sind metallische Pigmente wie beispielsweise Goldbronze, Silberbronze, Iriodinpigmente, Glitter.

Der mittlere Durchmesser der eingesetzten Pigmente liegt üblicherweise im Bereich von 20 nm bis 1,5 µm, bevorzugt im Bereich von 300 bis 500 nm.

Als Bindemittel kann man alle im Textildruck üblichen Bindemittel einsetzen, beispielsweise Bindemittel auf Basis von Polyurethanen und bevorzugt Bindemittel auf Acrylatbasis (Acrylatbinder). Bindemittel auf Acrylatbasis sind üblicherweise Copolymerisate von (Meth)acrylsäure einem oder mehreren mit (Meth)acrylsäure-C₁-C₁₀-Alkylester und gegebenenfalls weiteren Comonomeren wie beispielsweise (Meth)acrylnitril und Styrol, wobei die (Meth)acrylsäure mit beispielsweise Alkalimetallhydroxid oder Ammoniak partiell oder vollständig neutralisiert sein kann.

Die Bindemittel, insbesondere Bindemittel auf Acrylatbasis, haben beispielsweise eine Glastemperatur Tg von mindestens 0°C, ermittelt beispielsweise nach der Fox-Gleichung oder bestimmt nach DSC (Differentialthermoanalyse, Differential Scanning Calorimetry).

Das Verhältnis Pigment zu Bindemittel kann man in weiten Grenzen wählen. So ist es beispielsweise möglich, Pigment und Bindemittel in einem Gewichtsverhältnis von 20 : 1 bis 1 : 100 zu wählen. In einer bevorzugten Ausführungsform der vorliegenden Erfindung stellt man das Verhältnis Pigment zu erfindungsgemäß eingesetzter wässriger Dispersion so ein, dass das Gewichtsverhältnis von Pigment zu Feststoffanteile von erfindungsgemäß eingesetzter wässriger Dispersion im Bereich von 1 : 1 bis 1 : 20 liegt.

Natürlich ist es auch möglich, zunächst Pigment und Bindemittel in einem Gewichtsverhältnis im Bereich von 20 : 1 bis 10 : 1 vorzumischen und erst unmittelbar vor dem Druck weiteres Bindemittel zuzumischen.

Weitere gängige Hilfsmittel für Pigmentdruckpasten im Textildruck sind aus Ullmann, Handbuch der technischen Chemie und Verfahrenstechnik bekannt, vergleiche beispielsweise Ullmann's Enyclopedia of Industrial Chemistry, 5. Auflage, Stichwort: Textile Auxiliaries, Bd. A26, S. 286 ff. und 296 ff., Verlag Chemie, Weinheim, Deerfield/Florida, Basel; 1996, und aus dem Textil-Hilfsmittel-Katalog, Konradin Verlag Robert Kohlhammer GmbH, D-70771 Leinfelden-Echterdingen. Als gängige Hilfsmittel seien Verdicker, Fixierer, Griffverbesserer, Entschäumer, Rheologieverbesserer, Säurespender und Emulgatoren beispielhaft genannt:

In einer bevorzugten Ausführungsform der vorliegenden Erfindung enthalten Pigmentdruckpasten weiterhin Griffverbesserer, ausgewählt aus Silikonen, insbesondere Polydimethylsiloxanen, und Fettsäure-C₁-C₁₀-Alkylestern. Beispiele für kommerziell erhältliche Griffverbesserer, die den erfindungsgemäßen Pigmentdruckpasten zugesetzt werden können, sind Acramin® Weichmacher SI (Bayer AG), Luprimol SIG®, Luprimol TX 4732 und Luprimol CW® (BASF Aktiengesellschaft).

In einer bevorzugten Ausführungsform der vorliegenden Erfindung enthalten die Pigmentdruckpasten als weitere Zusätze einen oder mehrere Emulgatoren. Beispiele für geeignete Emulgatoren sind aryl- oder alkylsubstituierte Polyglykolether. Kommerziell erhältliche Beispiele für geeignete Emulgatoren sind Emulgator W® (Bayer), Luprintol PE New® und Luprintol MP® (BASF Aktiengesellschaft).

Zur Herstellung von Pigmentdruckpasten kann man beispielsweise so vorgehen, dass man Wasser, gegebenenfalls einen Entschäumer, beispielsweise einen Entschäumer auf Silikonbasis verrührt und unter weiterem Mischen mindestens ein Bindemittel zufügt. Danach kann man einen oder mehrere Emulgatoren und mindestens ein Pigment zugeben. Ein weiterer Bestandteil einer Pigmentdruckpaste kann ein Griffverbesserer sein, der als nächstes bei der Herstellung einer Pigmentdruckpaste zugegeben wird. Geeignete Griffverbesserer sind beispielsweise Silikonemulsionen. Anschließend gibt man mindestens eine erfindungsgemäße wässrige Dispersion hinzu und homogenisiert die Mischung, indem man sie beispielsweise rührt.

Eine typische Pigmentdruckpaste enthält, jeweils pro Kilogramm Pigmentdruckpaste,
5 bis 400 g, bevorzugt 10 bis 250 g Bindemittel, beispielsweise Acrylatbindemittel,
0 bis 100 g, bevorzugt 1 bis 5 g Emulgator,
1 bis 500 g, bevorzugt 1,5 bis 75 g der erfindungsgemäßen wässrigen Dispersion
0 bis 500 g, bevorzugt 0,1 bis 250 g, bevorzugt 0,5 bis 120 g mindestens eines Pigments, gegebenenfalls weitere Hilfsmittel; der Rest ist bevorzugt Wasser.

In einer Ausführungsform der vorliegenden Erfindung haben Pigmentdruckpasten bei 20°C eine Viskosität im Bereich von 3 bis 40000 mPa·s, bevorzugt 200 bis 2000 mPa·s und besonders bevorzugt 600 bis 1000 mPa·s. Die Viskositäten lassen sich nach gängigen Methoden bestimmen, insbesondere beispielsweise mit einem Rotationsviskosimeter, beispielsweise dem Viscotester VT02 oder VT24 der Fa. Haake Mess-Technik GmbH u. Co., Kartsruhe.

Pigmentdruck unter Verwendung mindestens einer Pigmentdruckpaste kann man nach verschiedenen Verfahren durchführen, die an sich bekannt sind. In der Regel verwendet man eine Schablone, durch die man die erfindungsgemäße Pigmentdruckpaste mit einer Rakel presst. Dieses Verfahren gehört zu den Siebdruckverfahren. Pigmentdruckverfahren unter Verwendung mindestens einer Pigmentdruckpaste liefern bedruckte Substrate mit ausgezeichnetem Griff. Gegenstand der vorliegenden Erfindung sind daher flexible Substrate und insbesondere Textilien, bedruckt nach dem Druckverfahren unter Verwendung mindestens einer Pigmentdruckpaste.

Zur Durchführung des Pigmentdruckverfahrens geht man bevorzugt so vor, dass man Textil mit mindestens einer Pigmentdruckpaste bedruckt und im Anschluss daran trocknet. Besonders bevorzugt ist eine Arbeitsweise, bei der man vor der eigentlichen Trocknung das mit der Druckpaste bedruckte Substrat vortrocknet, beispielsweise auf eine Restfeuchte im Bereich von 0,5 bis 2 Gew.-%. Die Vortrocknung bzw. Trocknung lässt sich auf gängigen Apparaturen durchführen. So ist sie beispielsweise, wenn man textile Substrate zu behandeln wünscht, auf allen in der Textilindustrie üblichen Fixier- und Trocknungsaggregaten durchführbar. Geeignete Trocknungs- bzw. Vortrocknungstemperaturen sind beispielsweise 50 bis 300°C, bevorzugt 70 bis 180°C.

Danach kann man über einen Zeitraum von beispielsweise 10 Sekunden bis 60 Minuten, bevorzugt 0,5 Minuten bis 7 Minuten bei Temperaturen im Bereich von 50 bis 300°C, bevorzugt 100 bis 160°C, besonders bevorzugt 110 bis 130°C thermisch behandeln. Polyamid, Polyester, Polyvinylchlorid, modifizierte Polyester, Polyestermischgewebe, Polyamidmischgewebe, Polyacrylnitril, Polycarbonat behandelt man thermisch vorteilhaft bei Temperaturen im Bereich von 130 bis 250°C, Polypropylengewebe beispielsweise zwischen 80 und 130°C, bevorzugt 110 und 130°C. Dabei ist unter der Temperatur im Allgemeinen die Temperatur des Mediums zu verstehen, welches das zu behandelnde flexible Substrat umgibt.

Die K-Werte der Polymerisate wurden nach H. Fikentscher, Cellulose-Chemie, Band 13, 58 - 64 und 71 - 74 (1932) in 3 gew.%iger wässriger Kochsalzlösung bei 25°C, und einer Konzentration von 0,1 Gew.-% bestimmt.

Die Viskosität der Dispersionen wurde jeweils in einem Brookfield-Viskosimeter mit einer Spindel Nr. 4 bei 20 UpM und einer Temperatur von 20°C gemessen. Falls nicht anders angegeben, bedeuten die Angaben in % Gewichtsprozent. Die Teilchengrößen wurden mit optischer Mikroskopie bestimmt.

### Beispiele

In den Beispielen wurden folgende Stabilisatoren zur Herstellung der erfindungsgemäßen wässrigen Dispersionen verwendet:
Stabilisator 1
   Copolymer aus 50 mol-% Acrylamid und 50 mol-% Dimethylaminoethylacrylat methochlorid, K-Wert des Copolymeren: 82,6, Polymergehalt 22,37%
Stabilisator 2
   Copolymer aus 50 mol-% Acrylamid und 45 mol-% Dimethylaminoethylacrylatmethochlorid, 5 mol-% Acrylsäure, K-Wert des Copolymeren: 45,1 , Polymergehalt 20,55%
Stabilisator 3
   Copolymer aus 60 mol-% Acrylamid und 38 mol-% Dimethylaminoethylacrylatmethochlorid, 2 mol-% Acrylsäure, K-Wert des Copolymeren: 78,0 , Polymergehalt 21,46%

Die in den Beispielen angegebenen Azostarter haben folgende Zusammensetzung:
Azostarter VA-044: 2,2'-Azobis(N,N'-dimethylenisobutyramidin)dihydrochlorid
Azostarter V-70: 2,2'-Azobis(4-methoxy-2,4-dimethylvaleronitril)
Azostarter V-65: 2,2'-Azobis(2,4-dimethylvaleronitril)

### Beispiel 1

In einem 21 Glasreaktor, der mit einem Ankerrührer und einer Vorrichtung für das Arbeiten unter Stickstoff ausgerüstet war, wurden unter Durchleiten von Stickstoff 600,59 g destilliertes Wasser, 160 g eines Blockcopolymerisates aus Ethylenoxid (EO) und Propylenoxid (PO) mit einem Gehalt an EO von 40 % und einer Molmasse von 1750 g/mol des Polypropylenglykolblocks (Pluronic® PE 6400) und 89,41g Stabilisator 1 vorgelegt. Anschließend wurden unter Rühren (200 UpM) bei Raumtemperatur 150 g Acrylsäure innerhalb von 10 Minuten zugetropft. Nach Zugabe von 0,2 g Azostarter V-65 wurde das Reaktionsgemisch auf eine Innentemperatur von 40°C erwärmt und bei dieser Temperatur gehalten. Nach 1 Stunde wurden weitere 0,3 g Azostarter V-65 und nach 5 Stunden 0,4 g Azostarter VA-044 zugegeben. Man erhielt eine milchig weiße Dispersion mit einer Viskosität von 650 mPas (Spindel 4, 20 UpM).

Eine bezogen auf Polyacrylsäure 2 %ige wässrige Lösung hatte nach pH Einstellung auf 7 mit Triethanolamin eine Viskosität von 550 mPas (Spindel 4 20 UpM).

### Beispiel 2

In einem 2I Glasreaktor, der mit einem Ankerrührer und einer Vorrichtung für das Arbeiten unter Stickstoff ausgerüstet war, wurden unter Durchleiten von Stickstoff 575,55 g destilliertes Wasser, 160 g eines Blockcopolymerisates aus Ethylenoxid (EO) und Propylenoxid (PO) mit einem Gehalt an EO von 40 % und einer Molmasse von 1750 g/mol des Polypropylenglykolblocks (Pluronic® PE 6400) und 89,41g Stabilisator 1 vorgelegt. Anschließend wurden unter Rühren (200 UpM) bei Raumtemperatur 175 g Acrylsäure innerhalb von 10 Minuten zugetropft. Nach Zugabe von 0,3 g Azostarter VA-044 wurde das Reaktionsgemisch auf eine Innentemperatur von 40°C erwärmt und bei dieser Temperatur bis zum Ende der Polymerisation gehalten. Man erhielt eine milchig weiße Dispersion mit einer Viskosität von 1550 mPas (Spindel 4 20 UpM). Die dispergierten Teilchen hatten eine Teilchengröße von 5 bis 10 µm mit einzelnen größeren Teilchen bis 50 µm.

Eine bezogen auf Polyacrylsäure 2 %ige wässrige Lösung hatte nach pH Einstellung auf 7 mit Triethanolamin eine Viskosität von 600 mPas (Spindel 4 20 UpM),

### Beispiel 3

In einem 2I Glasreaktor, der mit einem Ankerrührer und einer Vorrichtung für das Arbeiten unter Stickstoff ausgerüstet war, wurden unter Durchleiten von Stickstoff 560,59 g destilliertes Wasser, 175 g eines Blockcopolymerisates aus Ethylenoxid (EO) und Propylenoxid (PO) mit einem Gehalt an EO von 40% und einer Molmasse von 1750 g/mol des Polypropylenglykolblocks (Pluronic® PE 6400) und 89,41g Stabilisator 1 vorgelegt. Anschließend wurden unter Rühren (200 UpM) bei Raumtemperatur 175 g Acrylsäure und 0,875 g Triallylamin innerhalb von 10 Minuten zugetropft. Nach Zugabe von 0,3 g Azostarter VA-044 wurde das Reaktionsgemisch auf eine Innentemperatur von 40°C erwärmt und bei dieser Temperatur bis zum Ende der Polymerisation gehalten. Man erhielt eine milchig weiße Dispersion mit einer Viskosität von 4000 mPas (Spindel 4 20 UpM). Das dospergierte Polymer hatte eine Teilchengröße von 5 bis 10 µm mit einzelnen größeren Teilchen bis 40 µm.

Eine bezogen auf Polyacrylsäure 1 %ige wässrige Lösung hatte nach pH Einstellung auf 7 mit Triethanolamin eine Viskosität von 11600 mPa s (Spindel 6 20 UpM),

### Beispiel 4

In einem 2I Glasreaktor, der mit einem Ankerrührer und einer Vorrichtung für das Arbeiten unter Stickstoff ausgerüstet war, wurden unter Durchleiten von Stickstoff 560,59 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 89,41 g Stabilisator 1 vorgelegt. Anschließend wurden unter Rühren (200 UpM) bei Raumtemperatur 175 g Acrylsäure und 0,875 g Triallylamin innerhalb von 10 Minuten zugetropft. Nach Zugabe von 0,3 g Azostarter VA-044 wurde die Mischung auf eine Innentemperatur von 40°C erwärmt und bei dieser Temperatur bis zum Ende der Polymerisation gehalten. Man erhielt eine milchig weiße Dispersion mit einer Viskosität von 6700 mPas (Spindel 5 20 UpM).

Eine bezogen auf Polyacrylsäure 1 %ige wäßrige Lösung hatte nach pH Einstellung auf 7 mit Triethanolamin eine Viskosität von 11500 mPa s (Spindel 6 20 UpM).

### Beispiel 5

In einem 21 Glasreaktor, der mit einem Ankerrührer und einer Vorrichtung für das Arbeiten unter Stickstoff ausgerüstet war, wurden unter Durchleiten von Stickstoff 560,59 g destilliertes Wasser, 175 g eines Blockcopolymerisates aus EO und PO mit einem Gehalt an EO von 30 % und einer Molmasse von 1100 g/mol des Polypropylenglykolblocks (Pluronic® PE 4300) und 89,41g Stabilisator 1 vorgelegt. Anschließend wurden unter Rühren (200 UpM) bei Raumtemperatur 173,55 g Acrylsäure und 1,75 g Triallylamin innerhalb von 10 Minuten zugetropft. Nach Zugabe von 0,3 g Azostarter VA-044 wurde die Mischung auf eine Innentemperatur von 40°C erwärmt und bei dieser Temperatur bis zum Ende der Polymerisation gehalten. Man erhielt eine milchig weiße Dispersion mit einer Viskosität von 16000 mPas (Spindel 4, 20 UpM). Die dispergierten Polymerteilchen hatten eine Teilchengröße von 5 bis 10 µm.

Eine bezogen auf Polyacrylsäure 1 %ige wäßrige Lösung hatte nach pH Einstellung auf 7 mit Triethanolamin eine Viskosität von 21000 mPa s (Spindel 6, 20 UpM).

### Beispiel 6

In einem 21 Glasreaktor, der mit einem Ankerrührer und einer Vorrichtung für das Arbeiten unter Stickstoff ausgerüstet war, wurden unter Durchleiten von Stickstoff 515,88 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 134,12 g Stabilisator 1 vorgelegt. Anschließend wurden unter Rühren (200 UpM) bei Raumtemperatur 173,55 g Acrylsäure und 1,75 g Triallylamin innerhalb von 10 Minuten zugetropft. Nach Zugabe von 0,3 g Azostarter VA-044 wurde das Reaktionsgemisch auf eine Innentemperatur von 40°C erwärmt und bei dieser Temperatur bis zum Ende der Polymerisation gehalten. Man erhielt eine milchig weiße tixotrope Dispersion. Die Dispersion hat eine Teilchengröße von 8 bis 20 µm.

Eine bezogen auf Polyacrylsäure 1%ige wäßrige Lösung hatte nach pH Einstellung auf 7 mit Triethanolamin eine Viskosität von 34000 mPas (Spindel 6, 20 UpM).

### Beispiel 7

In einem 2I Glasreaktor, der mit einem Ankerrührer und einer Vorrichtung für das Arbeiten unter Stickstoff ausgerüstet war, wurden unter Durchleiten von Stickstoff 552,38 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 97,32 g Stabilisator 2 vorgelegt. Anschließend wurden unter Rühren (200 UpM) bei Raumtemperatur 173,55 g Acrylsäure und 1,75 g Triallylamin innerhalb von 10 Minuten zugetropft. Nach Zugabe von 0,3 g Azostarter VA-044 wurde die Mischung auf eine Innentemperatur von 40°C erwärmt und bei dieser Temperatur bis zum Ende der Polymerisation gehalten. Man erhielt eine milchig weiße Dispersion mit einer Viskosität von 42000 mPas (Spindel 4, 20 UpM). Die dispergierten Polymerteilchen hatten eine Teilchengröße von 5 bis 10 µm.

Eine bezogen auf Polyacrylsäure 1 %ige wässrige Lösung hatte nach pH Einstellung auf 7 mit Triethanolamin eine Viskosität von 13000 mPas (Spindel 6, 20 UpM).

### Beispiel 8

In einem 2I Glasreaktor, der mit einem Ankerrührer und einer Vorrichtung für das Arbeiten unter Stickstoff ausgerüstet war, wurden unter Durchleiten von Stickstoff 560,59 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 89,41 g Stabilisator 1 vorgelegt. Anschließend wurden unter Rühren (200 UpM) bei Raumtemperatur 173,25 g Acrylsäure und 1,75 g N,N'-Divinylethylenharstoff innerhalb von 10 Minuten zugetropft. Nach Zugabe von 0,3 g Azostarter VA-044 wurde die Mischung auf eine Innentemperatur von 40°C erwärmt und bei dieser Temperatur bis zum Ende der Polymerisation gehalten. Man erhielt eine milchig weiße Dispersion mit einer Viskosität von 4950 mPas (Spindel 4, 20 UpM). Die Dispersion hatte eine Teilchengröße von 5 bis 10 µm.

Eine bezogen auf Polyacrylsäure 1 %ige wässrige Lösung hatte nach pH Einstellung auf 7 mit Triethanolamin eine Viskosität von 3000 mPa s (Spindel 6, 100 UpM).

### Beispiel 9

In einem 2I Glasreaktor, der mit einem Ankerrührer und einer Vorrichtung für das Arbeiten unter Stickstoff ausgerüstet war, wurden unter Durchleiten von Stickstoff 556,5 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 93,2 g Stabilisator 3 vorgelegt. Anschließend wurden unter Rühren (200 UpM) bei Raumtemperatur 172,5 g Acrylsäure und 1,25 g Pentaerythrittriallylether (70%ig) innerhalb von 10 Minuten zugetropft. Nach Zugabe von 0,3 g Azostarter VA-044 wurde das Reaktionsgemisch auf eine Innentemperatur von 40°C erwärmt und bei dieser Temperatur bis zum Ende der Polymerisation gehalten. Man erhielt eine milchig weiße Dispersion mit einer Viskosität von 13000 mPas (Spindel 5, 20 UpM, 30°C ). Die dispergierten Polymerteilchen der Dispersion hatten eine Teilchengröße von 15 bis 35 µm.

Eine bezogen auf Polyacrylsäure 0,25 %ige wässrige Lösung hatte nach pH Einstellung auf 7 mit Triethanolamin eine Viskosität von 12000 mPas (Spindel 7, 10 UpM).

### Beispiel 10

In einem 2I Glasreaktor, der mit einem Ankerrührer und einer Vorrichtung für das Arbeiten unter Stickstoff ausgerüstet war, wurden unter Durchleiten von Stickstoff 556,5 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 93,2 g Stabilisator 3 vorgelegt. Anschließend wurden unter Rühren (200 UpM) bei Raumtemperatur 174 g Acrylsäure und 1,0 g Pentaerythrittriallylether (70%ig) innerhalb von 10 Minuten zugetropft. Nach Zugabe von 0,2 g Azostarter VA-044 wurde das Reaktionsgemisch auf eine Innentemperatur von 40°C erwärmt und bei dieser Temperatur bis zum Ende der Polymerisation gehalten. Nach Ende der Polymerisation wurden zur Nachpolymerisation 0,4 g Azostarter VA-044 zugesetzt. Man erhielt eine milchig weiße Dispersion mit einer Viskosität von 68000 mPas (Spindel 4, 2,5 UpM). Die Dispersion hatte eine Teilchengröße von 6 bis 30 µm.

Eine bezogen auf Polyacrylsäure 0,5 %ige wässrige Lösung hatte nach pH Einstellung auf 7 mit Triethanolamin eine Viskosität von 33000 mPas (Spindel 7, 20 UpM).

### Beispiel 11

In einem 2I Glasreaktor, der mit einem Ankerrührer und einer Vorrichtung für das Arbeiten unter Stickstoff ausgerüstet war, wurden unter Durchleiten von Stickstoff 560,39 g destilliertes Wasser, 175 g eines Blockcopolymerisates aus EO und PO mit einem Gehalt an EO von 30% und einer Molmasse von 1100 g/mol des Polypropylenglykolblocks (Pluronic® PE 4300) und 89,41 g Stabilisator 1 vorgelegt. Anschließend wurden unter Rühren (200 UpM) bei Raumtemperatur 174 g Acrylsäure und 1,0 g Pentaerythrittriallylether (70%ig) innerhalb von 10 Minuten zugetropft. Nach Zugabe von 0,2 g Azostarter VA-044 wurde das Reaktionsgemisch auf eine Innentemperatur von 40°C erwärmt und bei dieser Temperatur bis zum Ende der Polymerisation gehalten. Nach Ende der eigentlichen Polymerisation gab man zur Nachpolymerisation 0,4 g Azostarter VA-044 zu. Man erhielt eine milchig weiße Dispersion mit einer Viskosität von 15400 mPas (Spindel 4, 10 UpM). Die Dispersion hatte eine Teilchengröße von 6 bis 30 µm.

Eine bezogen auf Polyacrylsäure 0,5 %ige wässrige Lösung hatte nach pH Einstellung auf 7 mit Triethanolamin eine Viskosität von 30000 mPas (Spindel 7, 20 UpM).

## Patentansprüche

1. Wässrige Dispersionen von wasserlöslichen und/oder in Wasser quellbaren anionischen Polymerisaten, die erhältlich sind durch radikalische Polymerisation von ethylenisch ungesättigten, anionischen Monomeren in wässrigem Medium in Gegenwart mindestens eines Stabilisators, **dadurch gekennzeichnet, dass** man die Polymerisation in gegenwart einer Kombination aus mindestens einem wasserlöslichen Polymeren aus der Gruppe
(a) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen, Polyalkylenglykole, ein- oder beidseitig mit Alkyl-, Carboxyl- oder Aminogruppen endgruppenverschlossene Polyalkylenglykole
und
(b) wasserlöslichen Copolymeren aus
(b1) nichtionischen monoethylenisch ungesättigten Monomeren,
(b2) kationischen monoethylenisch ungesättigten Monomeren und gegebenenfalls
(b3) anionischen monoethylenisch ungesättigten Monomeren, wobei der Anteil der einpolymerisierten kationischen Monomeren größer ist als der der anionischen Monomeren,
als Stabilisator durchführt.

2. Wässrige Dispersionen nach Anspruch 1, **dadurch gekennzeichnet, dass** man als wasserlösliche Polymere der Gruppe (a) Polyalkylenglykole mit Molmassen M_{N} von 100 bis 100 000 und/oder ein- oder beidseitig mit Alkyl-, Carboxyl- oder Aminogruppen endgruppenverschlossene Polyalkylenglykole mit Molmassen M_{N} von 100 bis 100 000 einsetzt.

3. Wässrige Dispersionen nach Anspruch 1 oder 2, **dadurch gekennzeichnet, dass** man als wasserlösliche Polymere der Gruppe (a) Blockcopolymere aus Ethylenoxid und Propylenoxid mit einer Molmasse M_{N} von 500 bis 20 000 g/mol und einem Gehalt an Ethylenoxideinheiten von 10 bis 80 mol-% einsetzt.

4. Wässrige Dispersionen nach einem der Ansprüche 1 bis 3, **dadurch gekennzeichnet, dass** man als wasserlösliche Polymere der Gruppe (b) Copolymerisate aus
(b1) Acrylamid, Methacrylamid, N-Vinylformamid, N-Vinylpyrrolidon und/oder N-Vinylcaprolactam,
(b2) Dialkylaminoalkylacrylat, Dialkylaminoalkylmethacrylat, partiell oder vollständig neutralisierte Dialkylaminoalkyl(meth)acrylate, quaternierte Dialkylaminoalkyl(meth)acrylate, Dialkyldiallylammoniunhalogenide, N-Vinylimidazol und quaterniertem N-Vinylimidazol und gegebenenfalls
(b3) Acrylsäure, Methacrylsäure, Vinylsulfonsäure, Vinylphosphonsäure, Maleinsäure, Fumarsäure, Crotonsäure, Itakonsäure sowie die Alkalimetall- und Ammoniumsalze dieser Säuren.

5. Wässrige Dispersion nach einem der Ansprüche 1 bis 4, **dadurch gekennzeichnet, dass** man als Stabilisator eine Kombination aus
(a) mindestens einem Blockcopolymer aus Ethylenoxid und Propylenoxid
und
(b) mindestens einem Copolymer aus Acrylamid und Dimethylaminoethylacrylatmethochlorid einsetzt, wobei das Copolymer gegebenenfalls noch bis zu 5 mol-% Acrylsäure in einpolymerisierter Form enthalten kann.

6. Wässrige Dispersion nach einem der Ansprüche 1 bis 5, **dadurch gekennzeichnet, dass** man als anionische Monomere monoethylenisch ungesättigte C₃- bis C₅-Carbonsäuren, Vinylsulfonsäure, Styrolsulfonsäure, Acrylamidomethylpropansulfonsäure, Vinylphosphonsäure und/oder die Alkalimetall- oder Ammoniumsalze dieser Säuren einsetzt.

7. Wässrige Dispersionen nach einem der Ansprüche 1 bis 6, **dadurch gekennzeichnet, dass** man die Polymerisation der anionischen Monomeren zusätzlich in Gegenwart mindestens eines anderen Monomeren aus der Gruppe Acrylamid, Methacrylamid, Acrylsäureester von einwertigen Alkoholen mit 1 bis 20 C-Atomen, Methacrylsäureester von einwertigen Alkoholen mit 1 bis 20 C-Atomen, Vinylacetat, Vinylpropionat, Dialkylaminoethyl(meth)acrylate, Dialkylaminopropyl(meth)acrylate, Diallyldimethylammoniumchlorid, Vinylimidazol und quaterniertes Vinylimidazol sowie teilweise oder vollständig mit Säuren neutralisierten oder quaternierten Dialkylaminoalkyl(meth)acrylaten durchführt.

8. Wässrige Dispersionen nach einem der Ansprüche 1 bis 7, **dadurch gekennzeichnet, dass** man die Polymerisation der anionischen Monomeren zusätzlich in Gegenwart mindestens eines Vernetzers durchführt.

9. Wässrige Dispersionen nach einem der Ansprüche 1 bis 8, **dadurch gekennzeichnet, dass** man als Vernetzer Pentaerythrittriallylether, N,N'-Divinylethylenharnstoff, mindestens zwei Allylgruppen enthaltende Allyether von Zuckern, mindestens zwei Vinylgruppen aufweisende Vinylether oder Triallylamin sowie Mischungen dieser Verbindungen einsetzt.

10. Wässrige Dispersionen nach einem der Ansprüche 1 bis 6, **dadurch gekennzeichnet, dass** sie erhältlich sind durch Polymerisieren von Acrylsäure in Abwesenheit von anderen Monomeren.

11. Wässrige Dispersionen nach einem der Ansprüche 1 bis 6, **dadurch gekennzeichnet, dass** sie erhältlich sind durch Polymerisieren von Acrylsäure und/oder Methacrylsäure in Gegenwart von Pentaerythrittriallylether, N,N'-Divinylethylenharnstoff oder Triallylamin sowie Mischungen dieser Verbindungen.

12. Verfahren zur Herstellung von wässrigen Dispersionen von wasserlöslichen und/oder in Wasser quellbaren anionischen Polymerisaten durch radikalische Polymerisation von ethylenisch ungesättigten, anionischen Monomeren in wässrigem Medium in Gegenwart mindestens eines Stabilisators, **dadurch gekennzeichnet, dass** man die Polymerisation in Gegenwart einer Kombination aus mindestens einem wasserlöslichen Polymeren aus der Gruppe
(a) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen, Polyalkylenglykole, ein- oder beidseitig mit Alkyl-, Carboxyl- oder Aminogruppen endgruppenverschlossene Polyalkylenglykole
und
(b) wasserlöslichen Copolymeren aus
(b1) nichtionischen monoethylenisch ungesättigten Monomeren,
(b2) kationischen monoethylenisch ungesättigten Monomeren und gegebenenfalls
(b3) anionischen monoethylenisch ungesättigten Monomeren, wobei der Anteil der einpolymerisierten kationischen Monomeren größer ist als der der anionischen Monomeren,
als Stabilisator durchführt.

13. Verwendung der wässrigen Dispersionen nach den Ansprüchen 1 bis 11 als Verdickungsmittel für wässrige Systeme.

14. Verwendung nach Anspruch 13, **dadurch gekennzeichnet, dass** man die wäßrigen Dispersionen als Verdickungsmittel für Papierstreichmassen, Pigmentdruckpasten, wässrige Farben, Lederbehandlungsmittel, Kosmetikformulierungen, pharmazeutische Erzeugnisse und Agrochemikalien einsetzt.

## Claims

1. An aqueous dispersion of water-soluble and/or water-swellable anionic polymers which are obtainable by free radical polymerization of ethylenically unsaturated, anionic monomers in an aqueous medium in the presence of at least one stabilizer, wherein the polymerization is carried out in the presence of a combination of at least one water-soluble polymer from the group consisting of
(a) graft polymers of vinyl acetate and/or vinyl propionate on (i) polyethylene glycols or (ii) polyethylene glycols or polypropylene glycols blocked at one or both terminal groups with alkyl, carboxyl or amino groups, polyalkylene glycols, polyalkylene glycols blocked at one or both terminal groups with alkyl, carboxyl or amino groups
and
(b) water-soluble copolymers of
(b1) nonionic monoethylenically unsaturated monomers,
(b2) cationic monoethylenically unsaturated monomers and if appropriate
(b3) anionic monoethylenically unsaturated monomers, the fraction of the interpolymerized cationic monomers being greater than that of the anionic monomers,
as a stabilizer.

2. The aqueous dispersion according to claim 1, wherein polyalkylene glycols having molar masses M_{N} of from 100 to 100 000 and/or polyalkylene glycols blocked at one or both terminal groups with alkyl, carboxyl or amino groups and having molar masses M_{N} of from 100 to 100 000 are used as water-soluble polymers of group (a).

3. The aqueous dispersion according to claim 1 or 2, wherein block copolymers of ethylene oxide and propylene oxide having a molar mass M_{N} of from 500 to 20 000 g/mol and an ethylene oxide unit content of from 10 to 80 mol% are used as water-soluble polymers of group (a).

4. The aqueous dispersion according to any of claims 1 to 3, wherein copolymers of
(b1) acrylamide, methacrylamide, N-vinylformamide, N-vinylpyrrolidone and/or N-vinylcaprolactam,
(b2) dialkylaminoalkyl acrylate, dialkylaminoalkyl methacrylate, partially or fully neutralized dialkylaminoalkyl (meth)acrylates, quaternized dialkylaminoalkyl (meth)acrylates, dialkyldiallylammonium halides, N-vinylimidazole and quaternized N-vinylimidazole and if appropriate
(b3) acrylic acid, methacrylic acid, vinylsulfonic acid, vinylphosphonic acid, maleic acid, fumaric acid, crotonic acid, itaconic acid and also the alkali metal and ammonium salts thereof
are used as water-soluble polymers of group (b).

5. The aqueous dispersion according to any of claims 1 to 4, wherein the stabilizer used is a combination of
(a) at least one block copolymer of ethylene oxide and propylene oxide
and
(b) at least one copolymer of acrylamide and dimethylaminoethyl acrylate methochloride, which copolymer may if appropriate further comprise up to 5 mol% of acrylic acid in interpolymerized form.

6. The aqueous dispersion according to any of claims 1 to 5, wherein monoethylenically unsaturated C₃- to C₅-carboxylic acids, vinylsulfonic acid, styrenesulfonic acid, acrylamidomethylpropanesulfonic acid, vinylphosphonic acid and/or the alkali metal or ammonium salts thereof are used as anionic monomers.

7. The aqueous dispersion according to any of claims 1 to 6, wherein the polymerization of the anionic monomers is additionally carried out in the presence of at least one other monomer from the group consisting of acrylamide, methacrylamide, acrylic esters of monohydric alcohols of 1 to 20 carbon atoms, methacrylic esters of monohydric alcohols of 1 to 20 carbon atoms, vinyl acetate, vinyl propionate, dialkylaminoethyl (meth)acrylates, dialkylaminopropyl (meth)acrylates, diallyldimethylammonium chloride, vinylimidazole and quaternized vinylimidazole and also partially or fully acid-neutralized or quaternized dialkylaminoalkyl (meth)acrylates.

8. The aqueous dispersion according to any of claims 1 to 7, wherein the polymerization of the anionic monomers is additionally carried out in the presence of at least one crosslinking agent.

9. The aqueous dispersion according to any of claims 1 to 8, wherein the crosslinker used is pentaerythrityl triallyl ether, N,N'-divinylethyleneurea, at least doubly allyl-comprising allyl ethers of sugars, at least doubly vinyl-comprising vinyl ethers or triallylamine and also mixtures thereof.

10. The aqueous dispersion according to any of claims 1 to 6, obtainable by polymerizing acrylic acid in the absence of other monomers.

11. The aqueous dispersion according to any of claims 1 to 6, obtainable by polymerizing acrylic acid and/or methacrylic acid in the presence of pentaerythrityl triallyl ether, N,N'-divinylethyleneurea or triallylamine and also mixtures thereof.

12. A process for the preparation of aqueous dispersions of water-soluble and/or water-swellable anionic polymers by free radical polymerization of ethylenically unsaturated, anionic monomers in an aqueous medium in the presence of at least one stabilizer, wherein the polymerization is carried out in the presence of a combination of at least one water-soluble polymer from the group consisting of
(a) graft polymers of vinyl acetate and/or vinyl propionate on (i) polyethylene glycols or (ii) polyethylene glycols or polypropylene glycols blocked at one or both terminal groups with alkyl, carboxyl or amino groups, polyalkylene glycols, polyalkylene glycols blocked at one or both terminal groups with alkyl, carboxyl or amino groups
and
(b) water-soluble copolymers of
(b1) nonionic monoethylenically unsaturated monomers,
(b2) cationic monoethylenically unsaturated monomers and if appropriate
(b3) anionic monoethylenically unsaturated monomers, the fraction of the interpolymerized cationic monomers being greater than that of the anionic monomers,
as a stabilizer.

13. The use of an aqueous dispersion according to any of claims 1 to 11 as a thickener for aqueous systems.

14. The use according to claim 13, wherein the aqueous dispersion is used as a thickener for paper coating slips, pigment print pastes, aqueous colors, leather treatment compositions, cosmetic formulations, pharmaceutical articles of manufacture and agrochemicals.

## Revendications

1. Dispersions aqueuses de polymères anioniques solubles dans l'eau et/ou gonflables dans l'eau qui peuvent être obtenues par polymérisation radicalaire de monomères anioniques éthyléniquement insaturés dans un support aqueux en présence d'au moins un stabilisateur, **caractérisées en ce que** l'on exécute la polymérisation en présence d'une combinaison d'au moins un polymère soluble dans l'eau appartenant au groupe :
(a) polymères greffables d'acétate de vinyle et/ou de propionate de vinyle sur (i) des polyéthylèneglycols ou (ii) des polyéthylèneglycols ou des polypropylèneglycols, des polyalkylèneglycols à fermeture de groupes terminaux sur une face ou sur les deux faces avec des groupes alkyle, carboxyle ou amino, des polyalkylèneglycols à fermeture de groupes terminaux sur une face ou sur les deux faces avec des groupes alkyle, carboxyle ou amino et
(b) des copolymères solubles dans l'eau à partir de :
(b1) monomères non ioniques monoéthyléniquement insaturés,
(b2) monomères cationiques monoéthyléniquement insaturés et, le cas échéant,
(b3) monomères anioniques monoéthyléniquement insaturés, la part des monomères cationiques polymérisés étant supérieure à celle des monomères anioniques,
en tant que stabilisateur.

2. Dispersions aqueuses suivant la revendication 1, **caractérisées en ce que** l'on met en oeuvre comme polymères solubles dans l'eau du groupe (a) des polyalkylèneglycols avec des masses molaires M_{N} de 100 à 100 000 et/ou des polyalkylèneglycols à fermeture de groupes terminaux sur une face ou sur les deux faces avec des groupes alkyle, carboxyle ou amino, avec des masses molaires M_{N} de 100 à 100 000.

3. Dispersions aqueuses suivant la revendication 1 ou 2, **caractérisées en ce que** l'on met en oeuvre comme polymères solubles dans l'eau du groupe (a) des copolymères blocs à partir d'oxyde d'éthylène et d'oxyde de propylène avec une masse molaire M_{N} de 500 à 20 000 g/mole et une teneur en unités d'oxyde d'éthylène de 10 à 80 % mol.

4. Dispersions aqueuses suivant l'une des revendications 1 à 3, **caractérisées en ce que** l'on met en oeuvre comme polymères solubles dans l'eau du groupe (b) des copolymères à partir :
(b1) d'acrylamide, de méthacrylamide, de N-vinylformamide, de N-vinylpyrrolidone et/ou de N-vinylcaprolactame,
(b2) de dialkylaminoalkylacrylate, de dialkylaminoalkylméthacrylate, de dialkylaminoalkyl(méth)acrylates partiellement ou complètement neutralisés, de dialkylaminoalkyl(méth)acrylates quaternisés, d'halogénures de dialkyldiallylammonium, de N-vinylimidazol et de N-vinylimidazol quaternisé et, le cas échéant,
(b3) d'acide acrylique, d'acide méthacrylique, d'acide vinylsulfonique, d'acide vinylphosphonique, d'acide maléique, d'acide fumarique, d'acide crotonique, d'acide itaconique de même que des sels métalliques alcalins et des sels d'ammonium desdits acides.

5. Dispersion aqueuse suivant l'une des revendications 1 à 4, **caractérisée en ce que** l'on met en oeuvre comme stabilisateur une combinaison :
(a) d'au moins un copolymère bloc à partir d'oxyde d'éthylène et d'oxyde de propylène
et
(b) d'au moins un copolymère d'acrylamide et de méthochlorure de diméthylaminoéthylacrylate, le copolymère pouvant encore éventuellement contenir jusqu'à 5 % mol. d'acide acrylique sous forme polymérisée.

6. Dispersion aqueuse suivant l'une des revendications 1 à 5, **caractérisée en ce que** l'on met en oeuvre comme monomères anioniques des acides carboxyliques en C₃ à C₅ monoéthyliniquement insaturés, de l'acide vinylsulfonique, de l'acide styrènesulfonique, de l'acide acrylamidométhylpropanesulfonique, de l'acide vinylphosphonique et/ou les sels métalliques alcalins ou les sels d'ammonium desdits acides.

7. Dispersions aqueuses suivant l'une des revendications 1 à 6, **caractérisées en ce que** l'on exécute la polymérisation des monomères anioniques en supplément en présence d'au moins un autre monomère du groupe acrylamide, méthacrylamide, esters acryliques d'alcools monovalents avec 1 à 20 atomes de carbone, esters méthacryliques d'alcools monovalents avec 1 à 20 atomes de carbone, acétate de vinyle, propionate de vinyle, (méth)acrylates de dialkylaminoéthyle, (méth)acrylates de dialkylaminopropyle, chlorure de diallyldiméthylammonium, vinylimidazole et vinylimidazole quaternaire de même que (méth)acrylates de dialkylaminoalkyle partiellement ou totalement neutralisés ou quaternisés avec des acides.

8. Dispersions aqueuses suivant l'une des revendications 1 à 7, **caractérisées en ce que** l'on exécute la polymérisation des monomères anioniques en supplément en présence d'au moins un réticulent.

9. Dispersions aqueuses suivant l'une des revendications 1 à 8, **caractérisées en ce que** l'on met en oeuvre comme réticulents de l'éther pentaérythrittriallylique, de l'urée N,N'-divinyléthylénique, des éthers allyliques de sucres contenant au moins deux groupes allyle, des éthers vinyliques présentant au moins deux groupes vinyle ou de la triallylamine, de même que des mélanges de ces composés.

10. Dispersions aqueuses suivant l'une des revendications 1 à 6, **caractérisées en ce que** celles-ci peuvent être obtenues par polymérisation d'acide acrylique en l'absence d'autres monomères.

11. Dispersions aqueuses suivant l'une des revendications 1 à 6, **caractérisées en ce que** celles-ci peuvent être obtenues par polymérisation d'acide acrylique et/ou d'acide méthacrylique en présence d'éther pentaérythrittriallylique, d'urée N,N'-divinyléthylénique ou de triallylamine, de même que de mélanges de ces composés.

12. Procédé pour la préparation de dispersions aqueuses de polymères anioniques solubles dans l'eau et/ou gonflables dans l'eau par polymérisation radicalaire de monomères anioniques éthyléniquement insaturés dans un support aqueux en présence d'au moins un stabilisateur, **caractérisé en ce que** l'on exécute la polymérisation en présence d'une combinaison d'au moins un polymère soluble dans l'eau du groupe :
(a) polymères greffables d'acétate de vinyle et/ou de propionate de vinyle sur (i) des polyéthylèneglycols ou (ii) des polyéthylèneglycols ou des polypropylèneglycols, des polyalkylèneglycols à fermeture de groupes terminaux sur une face ou sur les deux faces avec des groupes alkyle, carboxyle ou amino, des polyalkylèneglycols à fermeture de groupes terminaux sur une face ou sur les deux faces avec des groupes alkyle, carboxyle ou amino
et
(b) des copolymères solubles dans l'eau à partir de :
(b1) monomères non ioniques monoéthyléniquement insaturés,
(b2) monomères cationiques monoéthyléniquement insaturés et, le cas échéant,
(b3) monomères anioniques monoéthyléniquement insaturés, la part des monomères cationiques polymérisés étant supérieure à celle des monomères anioniques,
en tant que stabilisateur.

13. Utilisation des dispersions aqueuses suivant les revendications 1 à 11 comme épaississants pour des systèmes aqueux.

14. Utilisation suivant la revendication 13, **caractérisée en ce que** l'on met en oeuvre les dispersions aqueuses comme épaississants pour masses d'enduction du papier, pâtes d'impression à pigments, peintures aqueuses, produits de traitement du cuir, formulations cosmétiques, produits pharmaceutiques et produits chimiques pour l'agriculture.
